(19) Europäisches Patentamt
European Patent Office
Office européen des brevets

(11) **EP 2 448 819 B1**

(12) **EUROPEAN PATENT SPECIFICATION**

(45) Date of publication and mention
of the grant of the patent:
**12.09.2018 Bulletin 2018/37**

(21) Application number: **10809638.9**

(22) Date of filing: **05.07.2010**

(51) Int Cl.:
*B64F 5/00* (2017.01)      *G06F 17/10* (2006.01)
*B64C 3/10* (2006.01)      *G06Q 99/00* (2006.01)
*B64C 39/10* (2006.01)     *B64C 3/00* (2006.01)

(86) International application number:
**PCT/IN2010/000448**

(87) International publication number:
**WO 2011/021206 (24.02.2011 Gazette 2011/08)**

(54) **WING AND PROPELLER SYSTEM, METHOD OF OPTIMIZING WING AND PROPELLER/ROTOR SYSTEM AND METHOD OF REDUCING INDUCED DRAG**

FLÜGEL- UND PROPELLERSYSTEM, VERFAHREN ZUR OPTIMIERUNG EINES FLÜGEL- UND PROPELLER/ROTORSYSTEMS SOWIE VERFAHREN ZUR REDUZIERUNG DES ERZEUGTEN LUFTWIDERSTANDS

SYSTÈME D'AILE ET D'HÉLICE, PROCÉDÉ D'OPTIMISATION DU SYSTÈME D'AILE ET D'HÉLICE/DE ROTOR, ET PROCÉDÉ DE RÉDUCTION DE LA TRAÎNÉE INDUITE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **03.07.2009 IN CH15802009**

(43) Date of publication of application:
**09.05.2012 Bulletin 2012/19**

(73) Proprietor: **Jawaharlal Nehru Centre For Advanced Scientific Research Jakkur, Bangalore 560 064 (IN)**

(72) Inventors:
• **NARASIMHA, Roddam**
**Bangalore 560 064**
**Karnataka (IN)**
• **DESHPANDE, Suresh, Madhusudan**
**Bangalore 560 064**
**Karnataka (IN)**
• **PRAVEEN, Chandrashekarappa**
**Bangalore 560 065**
**Karnataka (IN)**

• **RAKSHITH, Belur, Raghavan**
**Bangalore 560 064**
**Karnataka (IN)**

(74) Representative: **V.O.**
**P.O. Box 87930**
**2508 DH Den Haag (NL)**

(56) References cited:
**WO-A2-2005/067413      US-A- 1 987 788**
**US-A- 5 244 167      US-A1- 2009 152 405**
**US-S- D 120 187      US-S- D 123 595**

• **VELDHUIS, L.L.M. ET AL.: 'A Simple Wing Optimization Code Including Propeller Effects. paper ICAS-98-2.3.4' 21ST CONGRESS OF INTERNATIONAL COUNCIL OF THE AERONAUTICAL SCIENCES 13 September 1998 - 18 March 1998, XP008148201**
• **VELDHUIS, L.L.M.: ''Optimization of Tractor Propeller/Wing Configurations' PROCEEDINGS OF THE INSTITUTE OF MECHANICAL ENGINEERS, PART G: JOURNAL OF AEROSPACE ENGINEERING 1989 - 1996 vol. 209, no. G3, 1995, pages 215 - .226, XP008148229**

EP 2 448 819 B1

**Description**

**TECHNICAL FIELD**

The disclosure relates to aeronautics, more particularly relating to wing planforms that reduce the induced or total drag of the wing substantially in aircraft driven by propellers or other rotors in tractor configuration.

**BACKGROUND**

The said wing design is determined by the application of a method for reducing the induced or total drag, and/or any other such aerodynamic parameter of interest, or any combination of them, that is affected as a result of at least one propeller slipstream flowing onto a wing.

In such a propeller-driven aircraft there is an aerodynamic interaction between the propeller slipstream and the wing. This is of great significance in particular if the propeller(s) is/are situated in front of the wing, for example a turboprop aircraft in tractor configuration. Such a configuration is known from US 5,244,167 A, which is considered as being the closest prior art and discloses the preamble of independent claim 1. During operation propellers not only produce a thrust but also accelerate the flow downstream of the propeller and impart a swirl to it. This results in a propeller air flow (hereinafter also referred to as a "propeller slipstream") in a helical or spiral shape that impinges on the wing surface that is situated behind the propeller/rotor. Depending on the air velocity in the slipstream and the direction of motion of the respective propeller blades relative to the wing, there is an increase or reduction in the local angle of attack on the wing. Consequently there is a corresponding deformation of the lift distribution on the wing as a result of which, other things being the same, there is a change in the induced drag of the wing.

Since the early 1990's there has been a decline in the usage of turboprops because of availability of cheap oil. At that time jets were preferred as they were affordable, faster and quieter. However, owing to climate change concerns and connectivity demands, turboprops are now once again becoming more attractive. This is because propeller and rotor-driven aircraft, in particular turboprops, are inherently more energy efficient than turbojets or turbofans. Hence there is a need to explore new technologies associated with turboprops and other rotor-driven aircraft and optimize them for even better performance.

The technologies currently associated with propeller-driven aircraft do not take adequate account of the potential to exploit the effects of the propeller slipstream to design a better wing. Improving aerodynamic efficiency has become increasingly important in recent years due to uncertain fuel prices and concerns about climate change. Furthermore, modern composite technologies for structural fabrication permit use of wing planforms that would be difficult to manufacture using metals. For all these reasons it is attractive to consider novel wing planforms that would improve aerodynamic efficiency.

The present disclosure addresses the problems due to the propeller slipstream by extending lifting line theory to include propeller effects and coupling it to an optimizer, which generates novel wing designs that offer better aerodynamic performance such as lower drag by optimizing the distribution of chord length along the wing span for prescribed twist distributions and/or other constraints.

**STATEMENT OF THE DISCLOSURE**

Accordingly, the disclosure provides for a wing and propeller/rotor system according to claim 1 and a corresponding method for reducing the induced or total drag of the wing of an aircraft according to claim 3.

**BRIEF DESCRIPTION OF THE ACCOMPANYING DRAWINGS**

The features of the present disclosure will become more fully apparent from the following description and appended claims, taken in conjunction with the accompanying drawings, understanding that these drawings depict only a few embodiments in accordance with the disclosure and are, therefore, not to be considered limiting of its scope; the disclosure will be described with additional specificity and detail through use of the accompanying drawings.

FIG. 1 shows a schematic representation of a wing in tractor-propeller configuration,
FIG. 2a shows schematic variation of tangential velocity along the propeller blade,
FIG. 2b shows schematic axial velocity along the propeller blade,
FIG. 3 shows aerofoil, illustrating angles taken positive counter clockwise from angle of zero lift,
FIG. 4 shows plot of variation of Fourier modes with collocation points,
FIG. 5 shows plot of circulation for a reference wing-propeller configuration,
FIG. 6a shows top view of typical wing planform illustrating chord distribution according to prior art,

FIG. 6b shows rear view of typical wing planform as seen from the trailing edge of the aircraft illustrating the twist distribution (magnified by 20 times!!), according to prior art,

FIG. 7a shows top view of one embodiment of the wing planform illustrating chord distribution according to present disclosure in a twin-propeller configuration,

FIG. 7b shows rear view of the embodiment of the wing planform of Fig. 7a as seen from the trailing edge of the aircraft illustrating the twist distribution (magnified by 20 times!!) according to present disclosure,

FIG. 7c: shows schematic of wing and propeller system for a twin-propeller configuration showing different chord regions according to present disclosure

FIG. 7d: shows schematic of wing and propeller system for a 4-propeller configuration showing different chord regions according to present disclosure

FIG. 8 shows flow chart required for the optimization process to generate various wing planforms according to present disclosure.

## DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description and drawings are not meant to be limiting. Other embodiments may be utilized, and other changes may be made, without departing from the spirit or scope of the subject matter presented herein. It will be readily understood that the aspects of the present disclosure, as generally described herein, and illustrated in the figures, can be arranged, substituted, combined, and designed in a wide variety of different configurations, all of which are explicitly contemplated and make part of this disclosure.

This disclosure is drawn, *inter-alia,* to wing and propeller system, and a method of reducing induced and/or total drag and/or any other such aerodynamic parameters of interest that are affected by the slipstream.

Referral Numerals:

1: wing and propeller system
2: wing planform
3.1, 3.2, 3.3, 3.4: Shorter wing chord regions
4.1, 4.2, 4.3, 4.4, 4.5 4.6: Longer wing chord regions
5, 5.1, 5.2, 5.3, 5.4.: propeller/rotor
6: wing leading edge
7: fuselage

This disclosure is in relation to a wing and propeller/rotor system according to claim 1.

Also, this disclosure is in relation to a method for reducing the induced or total drag of the wing of an aircraft according to claim 3.

In the above embodiment of the disclosure the wing and planform system (1) reduces induced or total drag of the wing by different amounts depending on wing/propeller characteristics and design constraints, that can be estimated by the methods described in this disclosure.

In yet another embodiment of the disclosure the parameter values of wing and propeller comprise initial wing data, aerofoil data, numerics data, propeller data, cost function and constraints.

In yet another embodiment of the disclosure the initial wing data comprise wing geometry consisting of root chord, tip chord, twist distribution, aspect ratio, wing planform area and lift coefficient.

In yet another embodiment of the disclosure the cost function value comprises lift induced drag and/or total drag or any other related aerodynamic parameter of interest.

In yet another embodiment of the disclosure the constraints comprise root tip chord, tip chord, wing planform area, lift coefficient, and bounds on twist and chord.

In yet another embodiment of the disclosure the computing modules comprise an optimizer (fmincon) of MATLAB, shape parameterization, constraint (NonIcon), propeller data (slipstream velocity, downwash field) and cost function (FUN). All these modules have been put together to form a software package 'PROWING' that can be used in a high-level technical computing language (e.g. MATLAB).

The word 'propeller' includes any open propulsive system using blades including the open rotor systems, mounted on and upstream of the wings of an aircraft. The word 'slipstream' will similarly refer to the velocity field induced by and associated with any such propeller. Due to the propeller, the region of the wing exposed to the propeller slipstream experiences higher velocities. For a given total lift coefficient, the circulation should go down since the streamwise velocity in the propeller slipstream is higher. Therefore, the induced drag that depends only on circulation is reduced. Using an extension of lifting line theory (developed by inventors to take into account the propeller slipstream effects), the inventors are further reducing the induced drag for a given total lift coefficient. The induced drag at a given total lift coefficient is minimized by shaping the wing planform suitably in combination with other means of reducing induced drag, e.g. an appropriate twist distribution along the wing. Using this theory an optimization technique has also been developed to obtain optimal wing designs for lower induced drag. The inputs for calculating the planform design are wing data such as wing area, aspect ratio, root chord, tip chord, twist distribution, geometric angle of attack and slipstream data. The outputs of the technique are an optimal chord distribution and also a twist distribution, which yields minimum induced drag subject to the specified constraints.

An apparatus and method are also described in this disclosure for generating families of wings with novel planforms or wing designs or profiles that reduce the induced or total drag of the wing of an aircraft driven by propellers or other rotors in the tractor configuration. The optimized wing planforms exploit the slipstream due to the presence of propeller or rotor to reduce the induced drag, which optionally may be combined with other devices such as winglets, wing twist distribution etc along the span. Using the optimization technique of PROWING software on the basis of an extended lifting line theory, and an optimization method using the weights of Bezier polynomials (Ref [1]), cubic splines or other similar mathematical bases as control parameters, optimal chord distributions, in combination with any twist distribution as considered necessary or as derived through the uses of PROWING, the wing planforms subject to specified constraints of the type already mentioned are generated by the described method. PROWING includes an optimizer code for computation for designing said wing planforms.

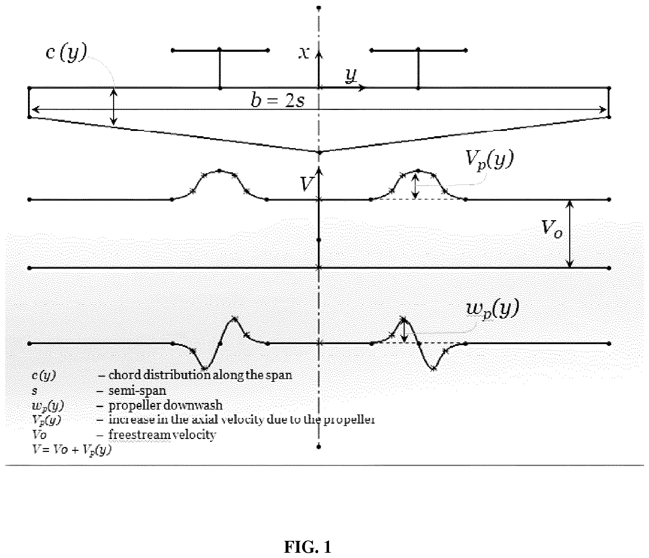

FIG. 1 shows a schematic of a wing in a tractor-propeller configuration. The wing has a semi-span of 's' and a chord distribution $c(y)$ where $y$ is the spanwise coordinate. Part of the wing immersed in the propeller slipstream experiences an increase in the axial velocity $V(y)$ and an additional downwash $w_p(y)$ along with the downwash due to the trailing vortices of the wing $w_w(y)$.

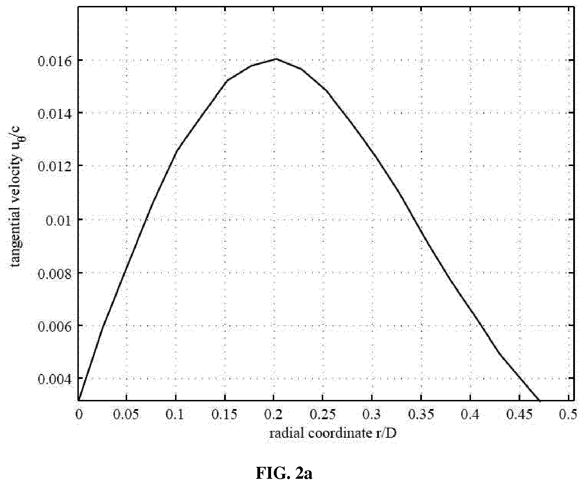

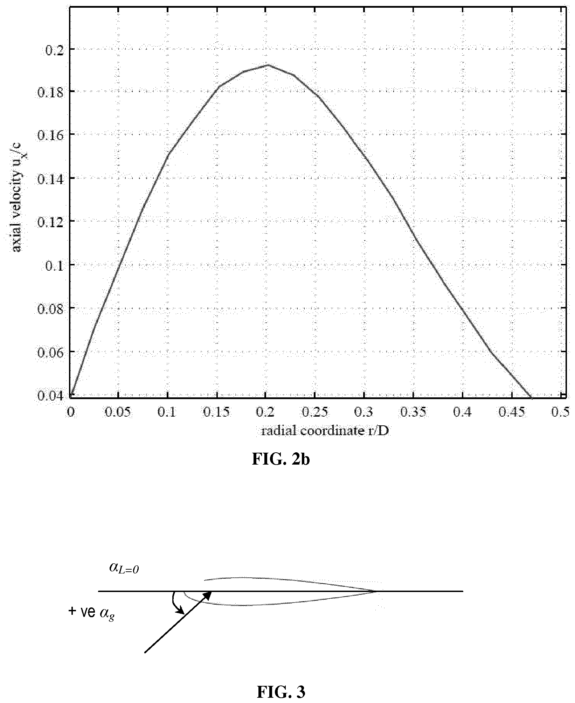

FIGS. 2a and 2b illustrate schematic variations of tangential velocity and axial velocity along the propeller blade respectively.

In order to account for the propeller slipstream effects, an extended lifting line theory was developed. The mathematical formulation is as follows:

$$\text{Given: } V(y) = V_0 + V_p(y) \text{ and } w_p(y),$$

where $V_p(y)$ and $w_p(y)$ are the time-averaged axial velocity and downwash respectively and $V_0$ is the free stream velocity.

The total downwash $w(y)$ is the sum of the downwash due to the wing and the propeller. If $\Gamma(y')$ is the circulation at $y'$ and $y$ is the location at which the total downwash is needed, then

$$w(y) = w_w(y) + w_p(y) \qquad (1)$$
$$= \frac{1}{4\pi} \int_{-s}^{+s} \frac{1}{y - y'} \frac{d\Gamma}{dy'} dy' + w_p(y) \qquad (2)$$

The effective angle of attack which the aerofoil section sees is given by

$$\alpha_e(y) = \alpha(y) - \frac{w_w(y) + w_p(y)}{V(y)} \qquad (3)$$

where $\alpha(y) = \alpha_g - \alpha_t(y)$, $\alpha_g$ is the geometric angle of attack and $\alpha_t(y)$ is the twist along the span measured from the angle of zero lift as indicated in FIG. 3.

The lift and induced drag are given respectively by

$$L = \int_{-s}^{+s} \rho V(y)\Gamma(y)dy \tag{4}$$

$$D_i = \int_{-s}^{+s} \rho w(y)\Gamma(y)dy \tag{5}$$

Transforming the coordinate system from $y$ to $\theta$ by putting $y = -s\cos\theta$ and expanding $\Gamma$ in Fourier series [2] with $A_k$ as the Fourier coefficients, then

$$\Gamma = 4sV_o\sum_{k=1}^{\infty} A_k\sin k\theta \tag{6}$$

The fundamental equations to determine downwash, the Fourier coefficients, lift and induced drag will respectively transform into the following set:

$$w(y)=v_o\frac{\sum_{k=1}^{\infty} kA_k\sin k\theta}{\sin\theta} + w_p(y) \tag{7}$$

$$\left(\sum_{k=1}^{\infty} A_k\sin k\theta\right)(k\mu+\sin\theta) = \mu\frac{V(\theta)}{V_o}\sin\theta\left(\alpha - \frac{w_p(\theta)}{V(\theta)}\right) : \mu = \frac{a_o c}{8s} \tag{8}$$

$$L = 4\rho V_o s^2\int_0^{\pi} V(\theta)\sin\theta\sum_{k=1}^{\infty} A_k\sin k\theta d\theta \tag{9}$$

$$D_i = 2\pi s^2\rho V_o^2\sum_{k=1}^{\infty} kA_k^2 + A_k B_k \tag{10}$$

where

$$B_k = \frac{2}{\pi}\int_0^{\pi} \frac{w_p(y)}{V_o}\sin k\theta\sin\theta \tag{11}$$

The lifting line equation is solved to determine the Fourier coefficients by the method of collocation using a least squares approach.

For wing-propeller configuration $n_c$ and $n_f$ were fixed at 320 and 48 respectively, where $n_c$ and $n_f(< n_c)$ are the number of collocation points along the span and number of Fourier coefficients respectively, after performing a series of convergence studies. If LL = 0 as the lifting line equation, then the least squares formulation is as follows:

$$LL(\theta, A_1 \dots A_{nf}) = \left(\sum_{k=1}^{n_f} A_k \sin k\theta\right)(k\mu + \sin\theta) - \mu\left(\frac{v(\theta)}{v_0}\right)\sin\theta\left(\alpha - \frac{w_z}{v(\theta)}\right) = 0 \quad (12)$$

$$\frac{\partial}{\partial A_j}\sum_{i=1}^{n_c}\left[LL\left(\theta_i, A_1 \dots A_{nf}\right)\right]^2 = 0; \quad j = 1 \dots n_f \quad (13)$$

The code was validated against Glauert's [2] results on monoplane coefficients varying with taper ratio for a wing alone case. For the purposes of validation computations were made with $n_c$ = 16, $n_f$ = 8.

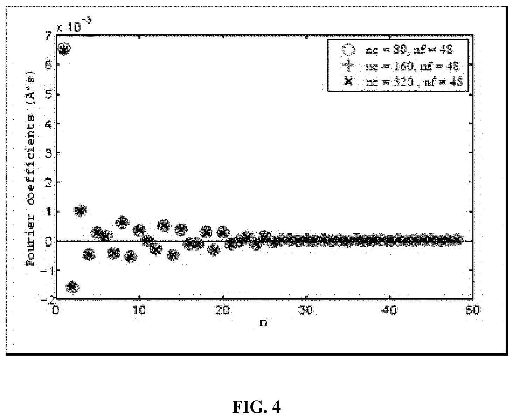

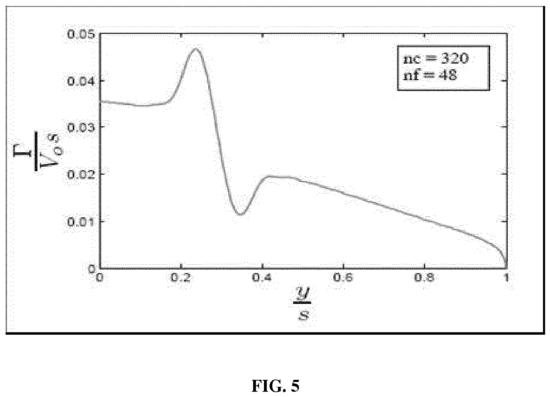

In order to determine the number of Fourier modes and collocation points for wing-propeller configuration, a convergence study was conducted. From FIG. 4, it can be seen that 48 Fourier modes and 320 collocation points are sufficient to determine the circulation distribution along the span with sufficient accuracy for a reference wing with a taper of 0.5 and a 3° linear washout from wing-root to -tip with a propeller as a propulsive unit. FIG. 5 shows the circulation distribution for the reference wing-propeller configuration.

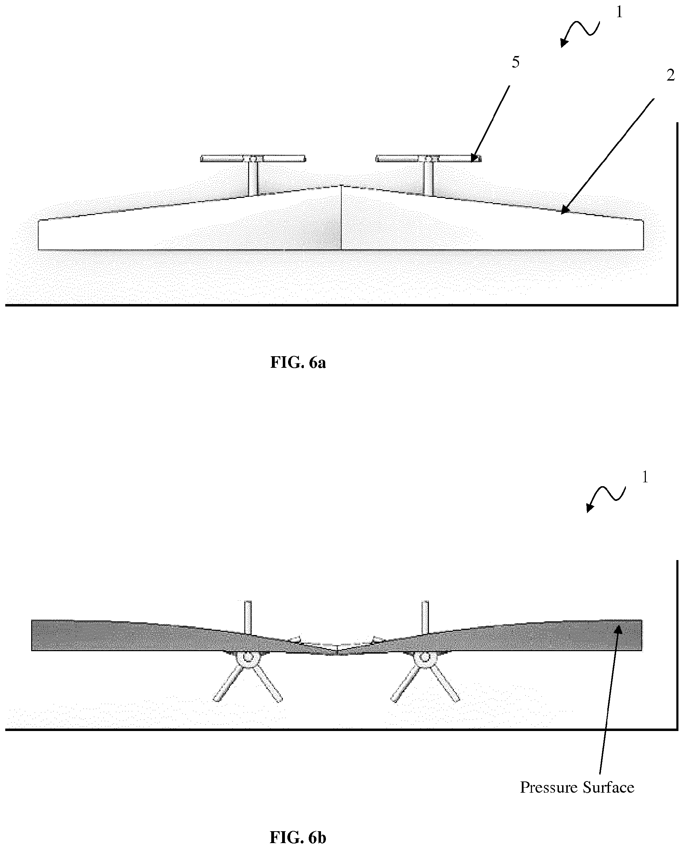

FIG. 6a illustrates top view of typical wing planform illustrating chord distribution according to prior art. FIG. 6b illustrates rear view of typical wing planform as seen from the trailing edge of the aircraft according to prior art. The wing aspect ratio is about 12 and the lift coefficient ($C_L$) is about 0.38.

Example:

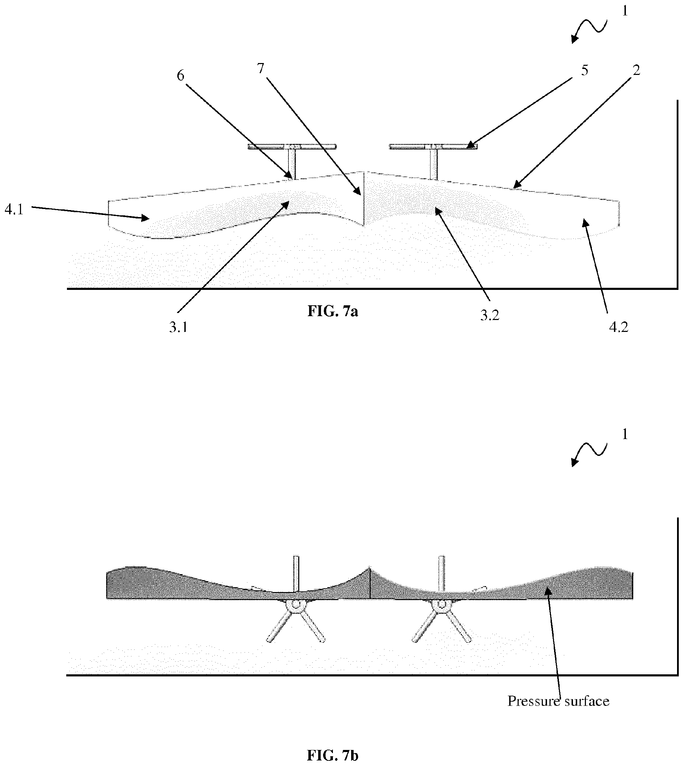

FIG. 7a illustrates top view of one embodiment of wing planform illustrating different chord regions in a twin propeller configuration, obtained using the software PROWING developed by the inventors. If there are four propellers there will be a region in the slipstream of each propeller labeled respectively 3.1, 3.2, 3.3, 3.4. And FIG. 7b illustrates rear view of the same embodiment of wing planform as seen from the trailing edge of the aircraft according to present disclosure. FIGS 7a and 7b provide an example of the optimized wing design obtained for a wing with a straight leading edge, a taper of 0.5 and a 3° linear washout. The constraints included $C_L$= 0.38, wing area, root chord, tip chord and bounds on twist ($-5^0 \le \alpha_t \le 5^0$). The optimized wing gives an induced drag reduction of 9.3 % and a total drag reduction of 3.8 %.

The optimized wing presented above uses the following values as the input data:

Aspect ratio 'AR' = 12
Taper ratio = 0.5
Washout = 3°
Aerofoil: NACA 63-615
No. of collocation points: 321
No. of Fourier modes: 48
Shape parameterization: Bezier curves
Number of modes: 4 for chord distribution, 4 for twist distribution
Propeller: Diameter/semispan = 0.18
Cost function = $C_{Di} + C_{Dp}$
Constraints: root chord, tip chord, wing planform area, $C_L$, Bounds on twist and chord.

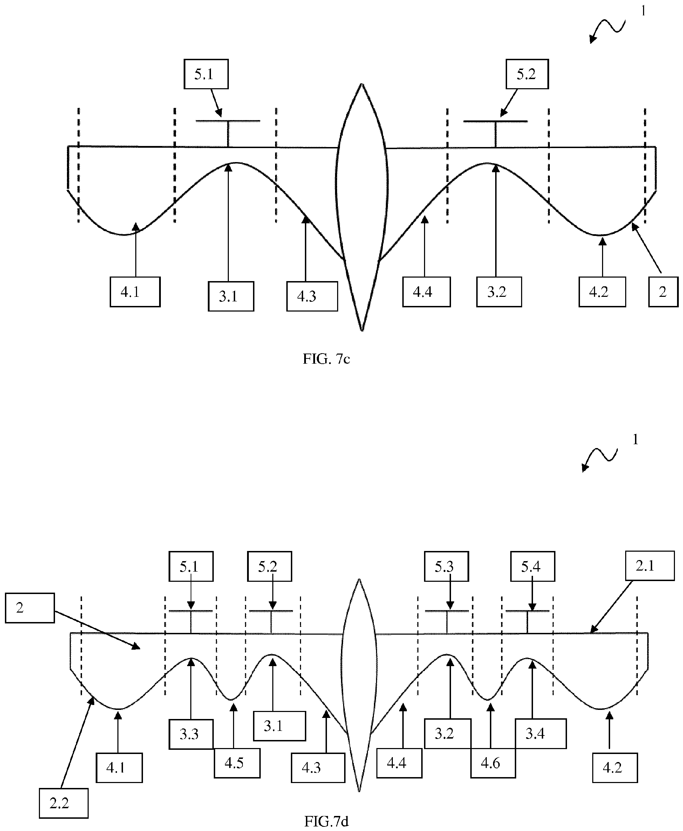

FIG. 7c illustrates schematic of wing and propeller system for a twin-propeller configuration showing different chord regions, and FIG. 7d illustrates schematic of wing and propeller system for a 4-propeller configuration showing different chord regions according to present disclosure.

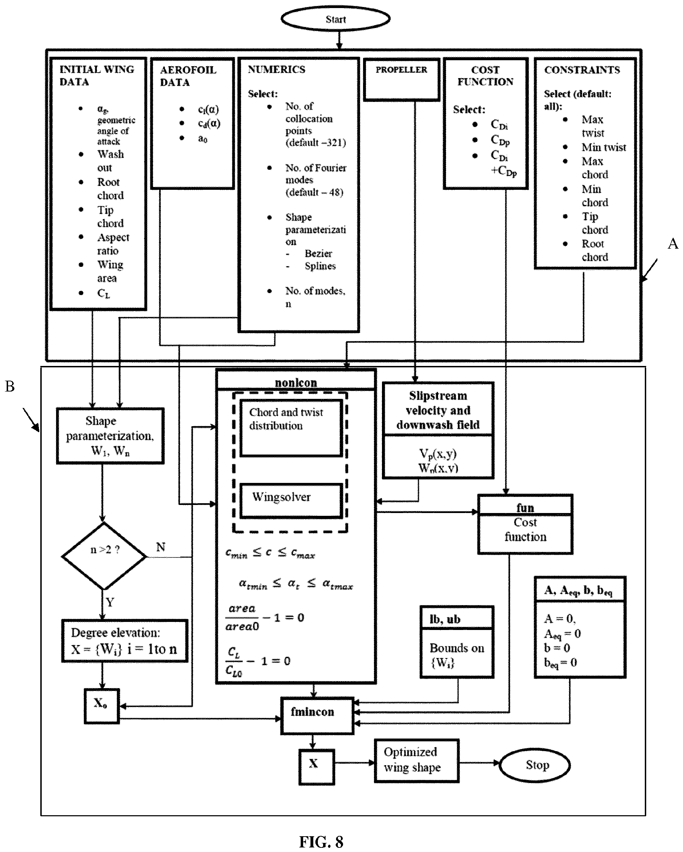

FIG. 8 illustrates flow chart of the software written to implement the optimization algorithm to generate various wing shapes according to present disclosure. The flow chart consists mainly of two blocks A and B. Block A describes the input and block B describes the modules required for the optimization exercise to generate various wing shapes that have lesser drag for wings on an aircraft driven by propellers or other rotors in the tractor configuration.

Following are the inputs that have to be specified in block A.

i. Initial wing data: This module describes certain aspects of the wing geometry by taking in inputs such as aspect ratio, taper ratio, and specifies the design lift coefficient $C_L$.
ii. Aerofoil data: This module provides sectional aerodynamic data of the aerofoil used.

iii. Numerics: Since the equations are being solved numerically certain inputs to discretise the equations such as collocation points, number of Fourier modes. To ensure that the optimized shapes are smooth, a method of parameterization of wing planform must be selected.

iv. Propellers: This module describes the time averaged velocity field as experienced by the wing.

v. Cost function: This is a certain objective function for which the optimizer generates shapes such that the objective function is either minimum or maximum. The objective functions in the present invention are the induced drag coefficient ($C_{Di}$) or parasite drag ($C_{Dp}$) or the sum of $C_{Di}$ and $C_{Dp}$ or any other combination of related aerodynamic parameters of interest.

vi. Constraints: The feasibility is realized by optimum shapes using certain constraints. Some of the constraints are root chord, tip chord, wing planform area, design $C_L$, bounds on twist and chord. Many other constraints may also specified depending on the problem of interest.

Box B contains modules that interact with the optimizer fmincon of MATLAB to generate optimal wing shapes. These modules include the following:

i. Shape parameterization: Based on the choice made in block A the wing chord distribution is represented as a polynomial and the weights of the polynomial are supplied as design variables to fmincon.

ii. NONLCON: This module ensures that the specified constraints are satisfied, solves for the Fourier coefficients using equation 10, and computes the value of lift coefficient using equation 11.

iii. Slipstream velocity and downwash field: This provides data on variation of velocities along the span of the wing which will be used to calculate various parameters in the problem.

iv. FUN: This module computes the value of the cost function based on which the optimizer drives the solution to the optimum.

With respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to inventions containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation *is* explicitly recited, those skilled in the art will recognize that such recitation should typically be interpreted to mean *t least* the recited number (e.g., the bare recitation of "two recitations," without other modifiers, typically means *at least* two recitations, or *two or more* recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

While various aspects and embodiments have been disclosed herein, other aspects and embodiments will be apparent to those skilled in the art. The various aspects and embodiments disclosed herein are for purposes of illustration and are not intended to be limiting, with the scope being indicated by the following claims.

References:

[1] Gerald Farin, "Curves and Surfaces for CAGD", Morgan Kaufmann, California, 2002.

[2] Glauert, "The Elements of aerofoil and airscrew theory", Cambridge University Press, 1926.

## Claims

1. A wing and propeller/rotor system (1), for reducing induced or total drag of a wing with at least one propeller/rotor mounted ahead of the wing in a tractor configuration, said system (1) **characterized by**:
a wing planform (2) having a continuous leading edge (2.1) and a continuous trailing edge (2.2), said leading and trailing edges (2.1 and 2.2) with a varying chord distribution along span of the wing, the wing planform (2) comprising:

   concave portions with shorter wing chords in slip stream regions (3.1, 3.2, 3.3 and 3.4) behind each of the propeller/rotor (5.1, 5.2, 5.3 and 5.4); and
   a convex portion with longer wing chords, when compared with the shorter wing chords, located on either side of said shorter wing chords in both outboard (4.1, 4.2) and inboard regions (4.3, 4.4, 4.5 and 4.6) adjacent to each of the propeller/rotor..

2. The wing and propeller/rotor system (1) as claimed in claim 1,
further comprising:
a propeller/rotor (5.1, 5.2, 5.3 and 5.4) mounted on a nose portion of an aircraft.

3. A method for reducing induced or total drag of a wing with propellers/rotors (5.1, 5.2, 5.3 and 5.4) mounted ahead of the wing in tractor configuration, the method comprising an act of: characterizing wing planform (2) having a continuous leading edge (2.1) and a continuous trailing edge (2.2), said leading and trailing edges (2.1 and 2.2) with a varying chord distribution along span of the wing, the wing planform (2) comprising:

   a concave portion with shorter wing chords in slip stream regions (3.1, 3.2, 3.3 and 3.4) behind each of the propellers/rotors (5.1, 5.2, 5.3 and 5.4); and
   a convex portion with longer wing chords, when compared with the shorter wing chords, located on either side of said shorter wing chords in both outboard (4.1, 4.2) and inboard regions (4.3, 4.4, 4.5 and 4.6) adjacent to each of the propeller/rotor.

4. An aircraft comprising a wing and propeller/rotor system (1) as claimed in claim 1.

## Patentansprüche

1. Flügel- und Propeller/Rotorsystem (1) zur Reduzierung von erzeugtem oder gesamtem Widerstand eines Flügels mit mindestens einem Propeller/Rotor, montiert vor dem Flügel in einer Traktorkonfiguration, das System (1) **gekennzeichnet durch**:
eine Flügelplattform (2) mit einer ununterbrochenen vorlaufenden Kante (2.1) und einer ununterbrochenen nachlaufenden Kante (2.2), die vorlaufenden und nachlaufenden Kanten (2.1 und 2.2) mit einer variierenden Sehnenverteilung entlang der Flügelspannweite, die Flügelplattform (2) umfassend:

   konkave Abschnitte mit kürzeren Flügelsehnen in Windschattenregionen (3.1, 3.2, 3.3 und 3.4) hinter jedem der Propeller/Rotoren (5.1, 5.2, 5.3 und 5.4) und
   einen konvexen Abschnitt mit längeren Flügelsehnen, wenn verglichen mit den kürzeren Flügelsehnen, auf jeder Seite der kürzeren Flügelsehnen in beiden Außenbord- (4.1, 4.2) und Innenbordregionen (4.3, 4.4, 4.5 und 4.6) neben jedem der Propeller/Rotoren.

2. Flügel- und Propeller/Rotorsystem (1) nach Anspruch 1, ferner umfassend:
einen Propeller/Rotor (5.1, 5.2, 5.3 und 5.4), montiert auf einem Nasenabschnitt eines Flugzeugs.

3. Verfahren zur Reduzierung von erzeugtem oder gesamtem Widerstand eines Flügels mit Propellern/Rotoren (5.1, 5.2, 5.3 und 5.4), montiert vor dem Flügel in Traktorkonfiguration, das Verfahren umfassend eine Handlung von: Charakterisierung von Flügelplattform (2) mit einer ununterbrochenen vorlaufenden Kante (2.1) und einer ununterbrochenen nachlaufenden Kante (2.2), die vorlaufenden und nachlaufenden Kanten (2.1 und 2.2) mit einer variierenden Sehnenverteilung entlang der Flügelspannweite, die Flügelplattform (2) umfassend:

einen konkaven Abschnitt mit kürzeren Flügelsehnen in Windschattenregionen (3.1, 3.2, 3.3 und 3.4) hinter jedem der Propeller/Rotoren (5.1, 5.2, 5.3 und 5.4) und
einen konvexen Abschnitt mit längeren Flügelsehnen, wenn verglichen mit den kürzeren Flügelsehnen, auf jeder Seite der kürzeren Flügelsehnen in beiden Außenbord- (4.1, 4.2) und Innenbordregionen (4.3, 4.4, 4.5 und 4.6) neben jedem der Propeller/Rotoren.

4. Flugzeug, umfassend ein Flügel- und Propeller/Rotorsystem (1) nach Anspruch 1.

## Revendications

1. Système d'aile et d'hélice/rotor (1), pour diminuer la traînée induite ou totale d'une aile, présentant au moins un hélice/rotor monté en avant de l'aile dans une configuration de traction, ledit système (1) étant **caractérisé par** : une forme en plan d'aile (2) qui présente un bord d'attaque continu (2.1) et un bord de fuite continu (2.2), lesdits bords d'attaque et de fuite (2.1 et 2.2) présentant une distribution de corde qui varie la longue de l'envergure de l'aile, la forme en plan d'aile (2) comprenant :

des parties concaves présentant des cordes d'aile plus courtes dans des régions de sillage (3.1, 3.2, 3.3 et 3.4) derrière chacun parmi les hélice/rotor (5.1, 5.2, 5.3 et 5.4) ; et
une partie convexe présentant des cordes d'aile plus longues par rapport aux cordes d'aile plus courtes, situées de part et d'autre desdites cordes d'aile plus courtes dans des zones tant vers l'extérieur (4.1, 4.2) et vers l'intérieur (4.3, 4.4, 4 4.5 et 4.6) adjacentes à chacun parmi les hélices/rotor.

2. Système d'aile et d'hélice/rotor (1) selon la revendication 1, comprenant en outre :
un hélice/rotor (5.1, 5.2, 5.3 et 5.4) monté sur une partie de nez d'un aéronef.

3. Un procédé pour diminuer la traînée induite ou totale d'une aile munie d'hélices/rotors (5.1, 5.2, 5.3 et 5.4) montés en avant de l'aile dans une configuration de traction, le procédé comprenant une action consistant à : caractériser une forme en plan d'aile (2) ayant un bord d'attaque continu (2.1) et un bord de fuite continu (2.2), lesdits bords d'attaque et de fuite (2.1 et 2.2) présentant une distribution de corde qui varie la longue de l'envergure de l'aile, la forme en plan d'aile (2) comprenant :

une partie concave présentant des cordes d'aile plus courtes dans des régions de sillage (3.1, 3.2, 3.3 et 3.4) derrière chacun parmi les hélices/rotors (5.1, 5.2, 5.3 et 5.4) ; et
une partie convexe présentant des cordes d'aile plus longues par rapport aux cordes d'aile plus courtes, situées de part et d'autre desdites cordes d'aile plus courtes dans des zones tant vers l'extérieur (4.1, 4.2) et vers l'intérieur (4.3, 4.4, 4.5 et 4.6) adjacentes à chacun parmi les hélices/rotor.

4. Un aéronef comprenant un système d'aile et d'hélice/rotor (1) tel que revendiqué à la revendication 1.

$c\,(y)$

$b = 2s$

$V_p(y)$

$V$

$V_o$

$w_p(y)$

$c\,(y)$      – chord distribution along the span
$s$      – semi-span
$w_p(y)$      – propeller downwash
$V_p(y)$      – increase in the axial velocity due to the propeller
$V_o$      – freestream velocity
$V = V_o + V_p(y)$

**FIG. 1**

**FIG. 2a**

**FIG. 2b**

**FIG. 3**

FIG. 4

**FIG. 5**

FIG. 6a

Pressure Surface

FIG. 6b

**FIG. 7a**

Pressure surface

**FIG. 7b**

FIG. 7c

FIG.7d

Start

**INITIAL WING DATA**

- $\alpha_g$, geometric angle of attack
- Wash out
- Root chord
- Tip chord
- Aspect ratio
- Wing area
- $C_L$

**AEROFOIL DATA**

- $c_l(\alpha)$
- $c_d(\alpha)$
- $a_0$

**NUMERICS**

Select:
- No. of collocation points (default –321)
- No. of Fourier modes (default – 48)
- Shape parameterization
  - Bezier
  - Splines
- No. of modes, n

**PROPELLER**

**COST FUNCTION**

Select:
- $C_{Di}$
- $C_{Dp}$
- $C_{Di}$ +$C_{Dp}$

**CONSTRAINTS**

Select (default: all):
- Max twist
- Min twist
- Max chord
- Min chord
- Tip chord
- Root chord

A

B

Shape parameterization, $W_1$, $W_n$

n >2 ?    N

Y

Degree elevation: X = {$W_i$} i = 1to n

$X_0$

**nonlcon**

Chord and twist distribution

Wingsolver

$c_{min} \leq c \leq c_{max}$

$\alpha_{tmin} \leq \alpha_t \leq \alpha_{tmax}$

$\dfrac{area}{area0} - 1 = 0$

$\dfrac{C_L}{C_{L0}} - 1 = 0$

**Slipstream velocity and downwash field**

$V_p(x,y)$
$W_n(x,v)$

**fun**
Cost function

**lb, ub**

Bounds on {$W_i$}

**A, A$_{eq}$, b, b$_{eq}$**

A = 0,
A$_{eq}$ = 0
b = 0
b$_{eq}$ = 0

**fmincon**

X

Optimized wing shape

Stop

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5244167 A

**Non-patent literature cited in the description**

- **GERALD FARIN.** Curves and Surfaces for CAGD. Morgan Kaufmann, 2002

- **GLAUERT.** The Elements of aerofoil and airscrew theory. Cambridge University Press, 1926